# EUROPEAN PATENT APPLICATION

(11) **EP 1 768 028 A1**
(43) Date of publication of application: **28.03.2007**
(21) Application number: 05255900.2
(22) Date of filing: 22.09.2005
(51) Int. Cl.: G06F 12/14, G06F 21/00

(54) **Addressing peripherals in an ic**

(71) Applicant: STMicroelectronics (Research&Development) Limited, Marlow, Buckinghanshire SL7 1YL (GB)
(72) Inventor: Stephen Nick Haydock, Bristol BS32 9AB (GB)
(74) Representative: Driver, Virginia Rozanne

(57) **Abstract**

An integrated circuit 10, method of making an integrated circuit 10, and method of addressing peripherals 8 of an integrated circuit 10 are disclosed for preventing copied software 16 from running on unauthorised hardware 14. A permanent key 20 is embedded in the integrated circuit 10 and used to transform a peripheral access address output by a processor 2 of the integrated circuit 10. The transformed access address is supplied to a peripheral address decoder 6 of the integrated circuit 10, which allows the processor 2 to access a corresponding peripheral 8. A method of supplying integrated circuits to prevent copied software 16 from running on unauthorised hardware 14 is also disclosed.

## Description

### Field of the Invention

The present invention relates to addressing peripherals in integrated circuits, particularly but not exclusively to an integrated circuit having a processor arranged to access a plurality of peripherals, and to methods of making and supplying integrated circuits.

### Background of the Invention

It is common for an integrated circuit to comprise a processor and a plurality of peripheral devices all incorporated onto the same chip. The processor executes software that controls the behaviour of the processor with respect to the peripherals, and in particular the way in which the peripherals are accessed.

For example, such integrated circuits may include peripherals such as a UART (Universal Asynchronous Receiver Transmitter) peripheral for transmitting and receiving data asynchronously via the serial port of a computer, a PTI (Programmable Transport Interface) peripheral used to demultiplex DVB standard transport data streams, a timer, an FDMA (Flexible Direct Memory Access) peripheral for moving data from memory to memory, and an MPEG (Moving Picture Experts Group) peripheral for handling digital video functions according to the MPEG standard, decoding frames in a compressed MPEG2 video stream into pictures suitable for display.

The integrated circuits themselves may be suitable for a wide variety of applications, for example in consumer electronics such as set-top boxes, DVD players, handheld computers and mobile telephones.

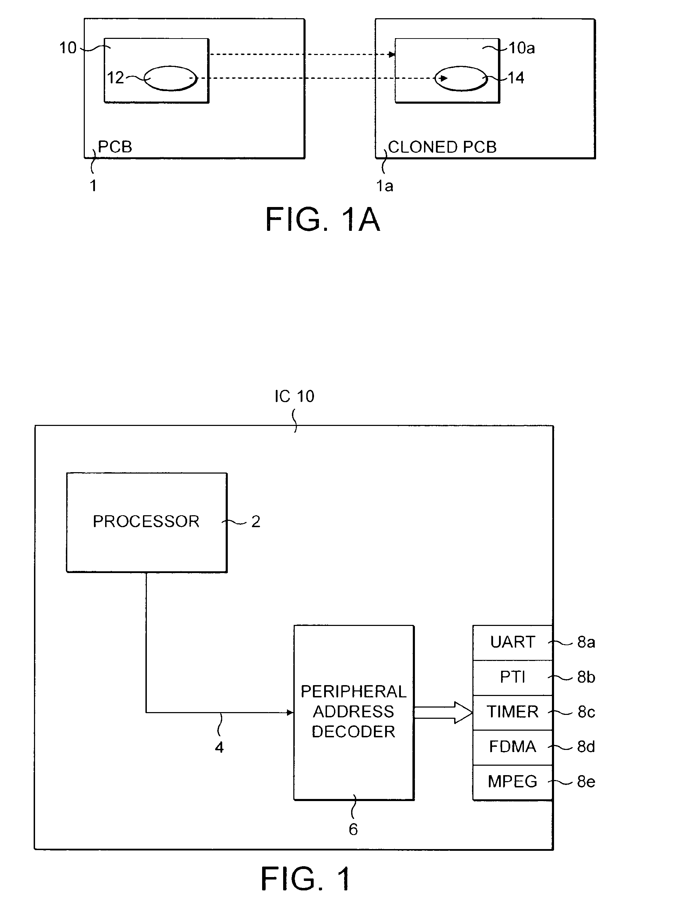

Figure 1 shows a typical integrated circuit device (or chip) 10 as known in the art. The integrated circuit 10 comprises a plurality of peripheral devices 8 such as those described above, and a processor 2 for executing software. The processor 2 is operable, upon executing an instruction to access a peripheral, to output a corresponding peripheral access address onto an address bus 4. The address bus 4 connects between the processor 2 and a peripheral address decoder 6. The peripheral address decoder 6 is operable to allow the processor 2 to access a peripheral 8 corresponding to the address appearing on the bus 4. In this way, the peripheral address decoder 6 maps access addresses onto respective peripherals 8 of the integrated circuit 10. The correlation between the access addresses and their respective peripherals 8 is referred to as the "address map".

However, there is a problem with such devices in that they are susceptible to cloning.
Figure 1A shows a PCB 1 (Printed Circuit Board) on which is mounted an integrated circuit 10 running software 2. If it is possible for an unscrupulous party to obtain information relating to the design of the PCB, then it may be possible to produce a cloned PCB 1 a that functions in a substantially similar manner to the original PCB. If the integrated circuit 10a can be sourced, ostensibly for use with software from another vendor, or in another market, a copy 14 of the required software can be obtained, allowing a fully operational replica of the product to be produced without the authorisation of the software vendor.

It is difficult to physically prevent a PCB from being cloned, but there is a need to provide some kind of obstacle to this cloning process particularly to the extent that it involves copied software on unauthorised hardware.

### Summary of the Invention

The present invention seeks to overcome the deficiencies in the prior art by preventing software from running on unauthorised hardware.

According to one aspect of the present invention, there is provided an integrated circuit comprising: a processor; a set of peripherals; a permanent key; transform logic arranged to receive at least one access address from the processor and to transform said at least one access address in dependence on the value of the permanent key to produce a transformed access address; and a peripheral address decoder arranged to receive access addresses including said at least one transformed access address from the processor and to map a respective access address onto each of said peripherals so as to allow the processor to access a corresponding one of said peripherals.

According to another aspect of the present invention, there is provided a method of addressing a peripheral in an integrated circuit comprising a processor and a set of peripherals, the method comprising: receiving an access address from the processor; transforming said access address in dependence on a permanent key incorporated into the integrated circuit to generate a transformed access address; and using the transformed access address to allow the processor to access a corresponding one of said peripherals.

According to another aspect of the present invention, there is provided a method of making an integrated circuit, the method comprising: providing a processor and a set of peripherals; incorporating a permanent key into the integrated circuit; providing a transform logic arranged to receive at least one access address from the processor and to transform said at least one access address in dependence on the value of the permanent key to generate a transformed access address; and providing a peripheral address decoder arranged to receive access addresses including said at least one transformed access address from the processor and to map a respective access address onto each of said peripherals so as to allow the processor to access a corresponding one of said peripherals.

In order for the peripheral address decoder to access a peripheral, software which is produced for the integrated circuit must know the transformed access addresses of the peripherals. That is, it must know the transformed address map, which is a result of a particular value of permanent key. Thus, software produced using an address map corresponding to one particular value of permanent key cannot drive the peripherals of an integrated circuit having a different value of permanent key. The permanent key is preferably made inaccessible on the chip, and its value kept secret. Thus the permanent key is difficult to clone.

The permanent key may comprise a code written to a fuse latch. The permanent key may comprise a code held in a ROM (Read Only Memory).

The permanent key may be of a type that already exists on known chips for another purpose, such as to identify the chip or to enable a particular scrambling or descrambling mode.

The transform logic may comprise a series of logic gates. The logic gates may comprise XOR (exclusive OR) gates. The logic gates may each be arranged with one input connected to a respective bit of the permanent key, and one input connected to a respective bit of the address output by the processor.

Alternatively, the transform logic may comprise a look-up table.

The above arrangement constitutes a physical barrier to resist the execution of copied software on unauthorised hardware. It is possible to achieve a similar effect by a method of supplying integrated circuits as defined below.

According to another aspect of the present invention, there is provided a method of supplying integrated circuits to first and second users, each integrated circuit comprising a processor, a set of peripherals, and an address map for mapping a respective access address onto each of said peripherals; the method comprising: supplying a first integrated circuit having a first address map to the first user, and supplying a second integrated circuit having a second address map to a second user; wherein the first and second integrated circuits are functionally identical except in that the first address map is different from the second address map.

Thus, software produced for the first integrated circuit will not run on the second integrated circuit.

As described more fully below, embodiments of the invention ensure that the IC 10 is made unique to one market, whilst allowing the manufacture of chips (e.g. 10a) that provide an identical set of features for other markets, or for other software/hardware vendors, without the risk that they will be used in cloned PCBs.

### Detailed Description

For a better understanding of the present invention and to show how the same may be carried into effect, reference will now be made, by way of example, to the corresponding drawings in which:
Figure 1 illustrates an integrated circuit as known in the art;
Figure 1A illustrates a situation in which copied software is run on cloned hardware;
Figure 2 illustrates an integrated circuit according to an embodiment of the present invention;
Figure 3 illustrates a processor output address bus according to an embodiment of the present invention;
Figure 4 illustrates a permanent key, transform logic and associated connections according an embodiment of the present invention;
Figure 5 illustrates a more detailed example of Figure 4; and
Figure 6 illustrates an exemplary application of the present invention.

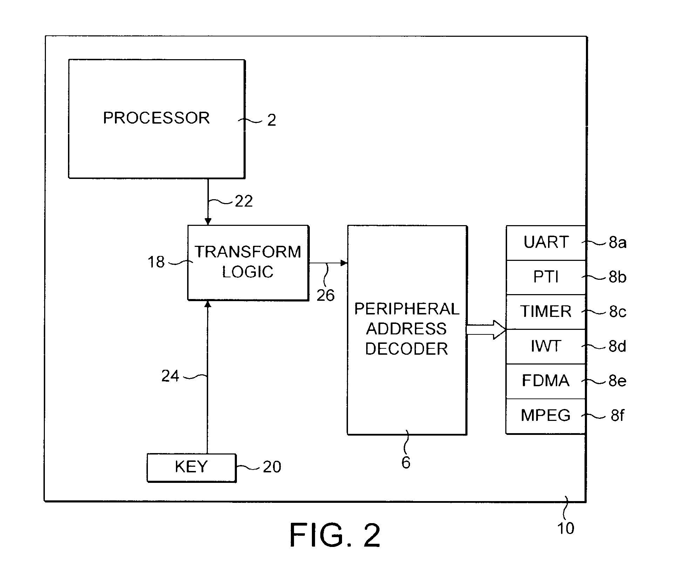

Reference is now made to Figure 2, which shows an integrated circuit device (or chip) 10 in accordance with one embodiment of the present invention. The integrated circuit 10 comprises a processor 2 for executing software and outputting peripheral access addresses, a plurality of peripherals 8, and peripheral address decoder 6 for receiving peripheral access addresses and allowing the processor to access the corresponding peripherals 8. In this example, the peripherals 8 include a UART peripheral 8a, a PTI peripheral 8b, a timer 8c, and FDMA peripheral 8d and an MPEG decoder peripheral 8e. However, the skilled person will appreciate that other embodiments may comprise any combination of these and/or other peripherals, as appropriate to the application for which the integrated circuit is intended. The processor 2, peripheral address decoder 6, and/or peripherals 8a to 8e may be similar or identical to those described with reference to figure 1.

The integrated circuit 10 also comprises a permanent key 20 being a value embodied in a permanent storage means of the chip, for example in a fuse latch or ROM included on the chip. The integrated circuit 10 further comprises transform logic 18 for transforming peripheral access address received at one input of the transform logic 18 in dependence on a value received at another input of the transform logic 18.

The processor 2 is connected to the transform logic 18 by processor output address bus 22. The permanent key 20 is connected to the transform logic 18 by key bus 24. The transform logic is connected to the peripheral address decoder 6 by transformed address bus 26.

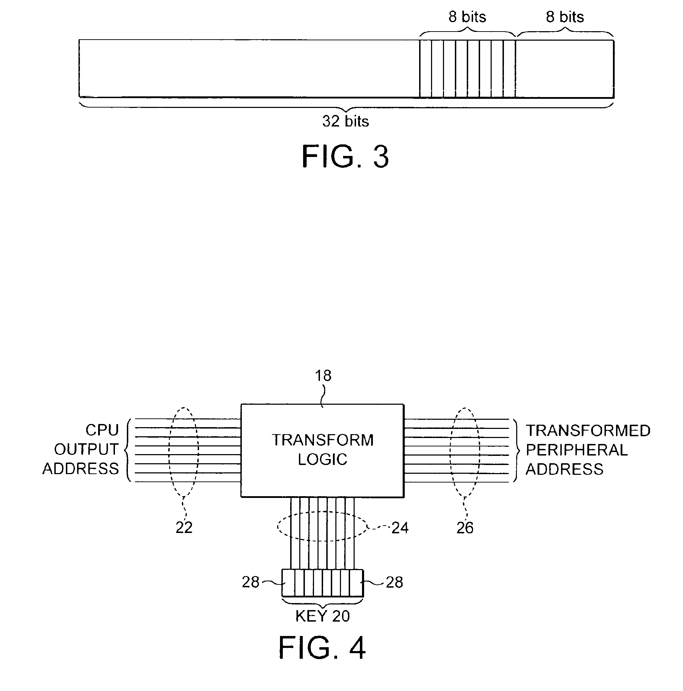

As illustrated in figure 3, only a particular range of bits on the processor output address bus 22 may be reserved for addressing the peripherals of the chip. In the example shown, the second eight bits of a thirty-two bit bus are reserved for the peripherals. The remaining bits may be used for other purposes such as addressing external devices or as control bits. However, for the purpose of this application, where reference is made to the processor output address or processor output address bus (or similar), it is intended only to refer to those bits that are used to address the peripherals.

In operation, when software running on the processor 2 instructs the processor to access one of the peripherals 8, a corresponding access address is output on the processor output address bus 22. This is the address at which the software "sees" the peripheral 8. The address on the processor output address bus 22 is received by the transform logic 18 and transformed according to the value of the permanent key 20 that is input via the key bus 24. The transformed access address is then output on the transformed address bus 26, and decoded by the peripheral address decoder 6 in order to allow the processor to access the desired peripheral 8.

Thus, if a software developer is given a transformed address map corresponding to a particular value of permanent key 20, then the software produced using that mapping will associate a given peripheral with a different address than does the peripheral address decoder 6. The translation between the two addresses is only possible using the correct transform logic 18 and value of the permanent key 20. If the transform logic 18 is absent, then there will be no translation of the address output by the processor 2 and so the peripheral address decoder 6 will not associate this address with the intended peripheral 8. Similarly, if the value of the key 20 is incorrect, the translation will be incorrect and so the peripheral address decoder 6 will not associate the transformed address with the intended peripheral. Thus, software developed for a particular key value will be unable to drive the peripherals 8 of an integrated circuit having a different value. In this way, software can be tied to a particular group of chips, for example to the chips supplied to a particular authorised software developer.

Note that the software developer need not know the value of the permanent key 20, but only the corresponding transformed address map. Further, the permanent key 20 is preferably made inaccessible and its value is written only shortly before sale. Thus, the value of the key 20 can be kept secret, making it difficult for a useful clone of the chip 10 to be produced.

In a preferred embodiment, the permanent key 20 is written to a fuse latch of the chip. The fuse latch comprises a series of fuse elements 28 that are selectively blown in order to permanently program a digital number into the latch. This option is particularly advantageous since some integrated circuits may already include a fuse latch for other reasons, such as to identify the chip as being of a particular type (e.g. NDS) or to enable a particular scrambling or descrambling mode used to encode/decode data transmitted on or off chip. Thus, by using or extending an existing fuse latch, it is possible to minimise the amount of additional circuitry required on the chip 10.

However, it should be appreciated that other means for storing the permanent key 20 could be used, such as a ROM. Note that by "permanent key" it is meant that the key should be impossible, difficult or at least inconvenient to erase or reprogram.

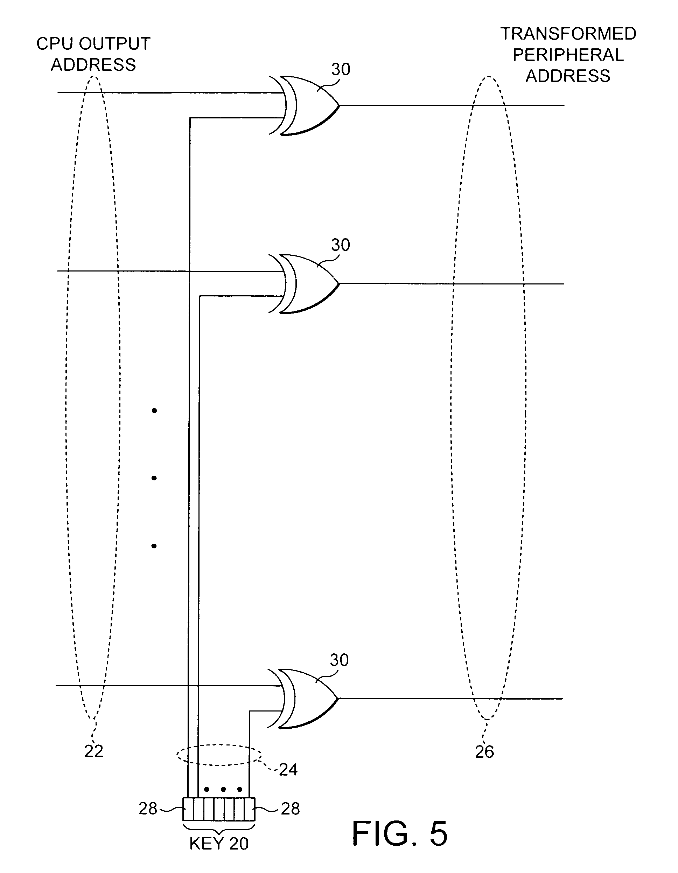

A preferred embodiment is now described with reference to figures 4 and 5. As shown in figure 4, an eight-bit permanent key 20 is stored in eight one-bit fuse elements 28, one for each bit of the processor output address bus 22.

When a peripheral is to be accessed, the transform logic 18 receives an address output by the processor 2 via the processor output address bus 22. The transform logic 18 is also connected to each fuse element 28 of the permanent key 20 via a respective line of the key bus 24. The transform logic 18 transforms the address input from the processor 2 based on the bits stored in the fuse elements 28 of the permanent key 20, and outputs a transformed peripheral access address on the transformed address bus 26.

Figure 5 shows an exemplary circuit for the transform logic 18, which comprises a set of eight XOR gates 30. Each XOR gate 30 has a first input connected to a respective one of the fuse elements 28, the connections between the XOR gates 30 and the fuse elements 28 forming the key bus 24. Each XOR gate 30 also has a second input connected to a respective bit of the processor output address bus 22. The outputs of the XOR gates 30 form the transformed address bus 26.

Thus, if a given fuse element 28 is set at logic-0, the corresponding XOR gate 30 will be transparent and the bit output by that gate will be equal to the bit input from the processor 2. On the other hand, if the fuse element is set at logic-1, the bit output by the corresponding XOR gate 30 will be the complement of the bit input from the processor 2. In this way, the processor output address will be transformed in dependence on the value of the permanent key 20. Other gate arrangements will be apparent to a person skilled in the art.

This arrangement is particularly advantageous since only a small amount of additional circuitry is required on the chip. Further, no extra machine cycles are required for a peripheral access.

In an alternative embodiment, the transform logic comprises a look-up table, whereby an input access address from the processor 2 is referenced against a table of output addresses in dependence on the value of the permanent key 20. However, this option is not preferred since it is generally more expensive and incurs additional machine cycles.

In preferred embodiments, the transformation is applied to the addresses of all the peripherals. However, it will be appreciated that the transformation could be applied to only some or even one of the addresses. Particularly, unauthorised parties would still be deterred from cloning if the transformed address corresponded to a peripheral 8 that was essential for a wide range of applications, for example the MPEG decoder peripheral.

In one embodiment, the transform logic 18, permanent key 20 and peripheral address decoder 6 are implemented in separate components of the integrated circuit. However, in alternative embodiments, one or both of the transform logic 18 and the permanent key 20 may be incorporated within the peripheral address decoder 6, and/or the transform logic 18 and permanent key 20 may be implemented in the same component.

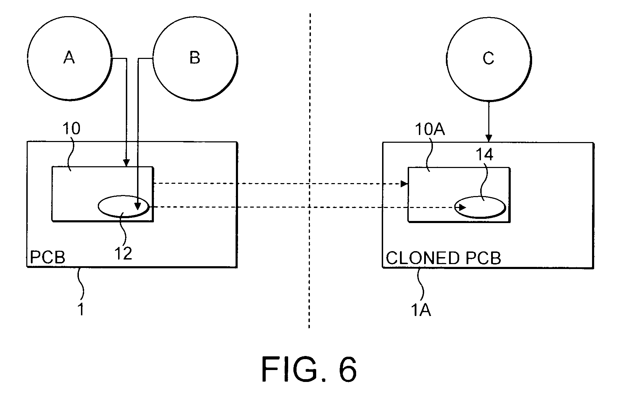

An application of the present invention is now described with reference to figure 6. Manufacturer A produces an integrated circuit 10 to which is written a particular value of permanent key 20, and provides software developer B with a transformed address map that corresponds to that value. The address map may be distributed, for example, in the form of a header file for use when the software is compiled and linked. Software developer B is then able to produce software 12 that will correctly drive the peripherals 8 of the integrated circuit 10. However, if a third party C attempts to clone the PCB10, then the version of the IC 10a that he is sold will not be written with the correct value of permanent key 20, or perhaps even will not include the transform logic 18 and permanent key 20 at all. As a result, software 16 copied from developer B will be useless when run on the cloned hardware 14, since the copied software 16 will use a different peripheral address mapping than the cloned chip 14. Therefore a third party is prevented from running copied software on unauthorised hardware.

In another application, the manufacturer A supplies hardware to both parties B and C, but with one address map used in the chips 10 supplied to B and another address map used in the chips 10a supplied to C. The chips supplied to both B and C are functionally identical, except in that they use different address maps. In a preferred embodiment, this is achieved by writing one value of permanent key 20a to the chips 10 supplied to B and writing a different value of permanent key 20 to the chips 10 supplied to C. In an alternative embodiment, this is achieved by supplying B with chips that use a different peripheral address decoder 6 (with different a peripheral address map) than the chips supplied to C. In either case, C is prevented from running software copied from B because B's software is produced using an address map that does not match the peripheral mapping of the chips supplied to C. Party C can only run software specifically produced for C's own hardware.CLAIMS:

## Claims

1. An integrated circuit (10) comprising:
a processor (2);
a set of peripherals (8);
a permanent key (20);
transform logic (18) arranged to receive at least one access address from the processor (2) and to transform said at least one access address in dependence on the value of the permanent key (20) to produce a transformed access address; and
a peripheral address decoder (6) arranged to receive access addresses including said at least one transformed access address from the processor (2) and to map a respective access address onto each of said peripherals (8) so as to allow the processor (2) to access a corresponding one of said peripherals (8).

2. An integrated circuit according to claim 1, wherein the permanent key (20) is written to a fuse latch of the integrated circuit (10).

3. An integrated circuit according to claim 1, wherein the permanent key (20) is held within a ROM of the integrated circuit (10).

4. An integrated circuit according to any preceding claim, wherein at least part of the permanent key (20) is arranged to provide another chip-related function in addition to its function in transforming an access address of a peripheral (8).

5. An integrated circuit according to claim 4, wherein the permanent key (20) provides at least one of the functions of: identifying the integrated circuit (10), enabling a scrambling mode, and enabling a descrambling mode.

6. An integrated circuit according to any preceding claim, wherein the transform logic (18) comprises a set of logic gates.

7. An integrated circuit according to claim 6, wherein the set of logic gates comprises a set of XOR gates (30).

8. An integrated circuit according to claim 6 or 7, wherein the permanent key (20) comprises a plurality of bits, and the logic gates are each arranged with one input connected to a respective bit of the permanent key (20) and one input connected to a respective bit of the address output by the processor (2).

9. An integrated circuit according to any of claims 1 to 5, wherein the transform logic (18) comprises a look-up table.

10. An integrated circuit according to any preceding claim, wherein at least one of the peripherals (8) comprises one of the following: a UART peripheral (8a), a PTI peripheral (8b), a timer (8c), an FDMA peripheral (8d), and an MPEG decoder peripheral (8e).

11. An integrated circuit according to any preceding claim, wherein the integrated circuit (10) is suitable for use in at least one of: a set-top box, a DVD player, a handheld computer and a mobile telephone.

12. An integrated circuit according to any preceding claim, wherein the peripheral address decoder (6), transform logic (18) and permanent key (20) are each implemented on separate components on the integrated circuit (10).

13. An integrated circuit according to any of claims 1 to 11, wherein at least two of the peripheral address decoder (6), transform logic (19) and permanent key (20) are incorporated into the same component of the integrated circuit (20).

14. A method of addressing a peripheral (8) in an integrated circuit (10) comprising a processor (2) and a set of peripherals (8), the method comprising:
receiving an access address from the processor (2);
transforming said access address in dependence on a permanent key (20) incorporated into the integrated circuit (10) to generate a transformed access address; and
using the transformed access address to allow the processor (2) to access a corresponding one of said peripherals (8).

15. A method according to claim 14, and the step of transforming said access address comprises reading the value of the permanent key (20) from a fuse latch.

16. A method according to claim 14, wherein the step of transforming said access address comprises reading the value of the permanent key (20) from a ROM.

17. A method according to any of claims 14 to 16, further comprising a step of using the permanent key (20) to provide another chip-related function in addition to the step of transforming an access address of a peripheral (8).

18. A method according to claim 17, wherein providing another chip-related function comprises providing at least one of the functions of: identifying the integrated circuit (10), enabling a scrambling mode, and enabling a descrambling mode

19. A method according to any of claims 14 to 18, wherein the permanent key (20) comprises a plurality of bits, and the step of transforming said access address comprises performing a logic operation on each bit of said access address in conjunction with a respective bit of the permanent key (20).

20. A method according to claim 19, wherein said logic operation comprises taking the exclusive-OR of said bit of said access address and the respective bit of the permanent key (20).

21. A method of making an integrated circuit, the method comprising:
providing a processor (2) and a set of peripherals (8),
incorporating a permanent key (20) into the integrated circuit (10);
providing a transform logic (18) to receive at least one access address from the processor (2) and to transform said at least one access address in dependence on the value of the permanent key (20) to generate a transformed access address; and
providing a peripheral address decoder (6) arranged to receive access addresses including said at least one transformed access address from the processor (2) and to map a respective access address onto each of said peripherals (8) so as to allow the processor (2) to access a corresponding one of said peripherals (8).

22. A method of supplying integrated circuits to first and second users, each integrated circuit comprising a processor, a set of peripherals, and an address map for mapping a respective access address onto each of said peripherals; the method comprising:
supplying a first integrated circuit having a first address map to the first user, and supplying a second integrated circuit having a second address map to a second user; wherein the first and second integrated circuits are functionally identical except in that the first address map is different from the second address map.

23. A method according to claim 22, wherein the first map is the result of a first transformation applied to at least one peripheral access address output by a processor of the first integrated circuit, and the second address map is the result of a second transformation applied to at least one peripheral access address output by a processor of the second integrated circuit.

24. A method according to claim 23, wherein the first transformation is performed based on the value of a first permanent key incorporated into the first integrated circuit, and the second transformation is performed based on the value of a second permanent key incorporated into the second integrated circuit.

25. A method according to claim 22, wherein the first address map is a property of a first peripheral address decoder of the first integrated circuit, and the second address map is a property of a second peripheral address decoder of the second integrated circuit.

26. A set-top box having an integrated circuit comprising:
a processor;
a set of peripherals;
a permanent key;
transform logic arranged to receive at least one access address from the processor and to transform said at least one access address in dependence on the value of the permanent key to produce a transformed access address; and
a peripheral address decoder arranged to receive access addresses including said at least one transformed access address from the processor and to map a respective access address onto each of said peripherals so as to allow the processor to access a corresponding one of said peripherals.

27. A DVD player having an integrated circuit comprising:
a processor;
a set of peripherals;
a permanent key;
transform logic arranged to receive at least one access address from the processor and to transform said at least one access address in dependence on the value of the permanent key to produce a transformed access address; and
a peripheral address decoder arranged to receive access addresses including said at least one transformed access address from the processor and to map a respective access address onto each of said peripherals so as to allow the processor to access a corresponding one of said peripherals.

28. A mobile telephone having an integrated circuit comprising:
a processor;
a set of peripherals;
a permanent key;
transform logic arranged to receive at least one access address from the processor and to transform said at least one access address in dependence on the value of the permanent key to produce a transformed access address; and
a peripheral address decoder arranged to receive access addresses including said at least one transformed access address from the processor and to map a respective access address onto each of said peripherals so as to allow the processor to access a corresponding one of said peripherals.

29. A handheld computer having an integrated circuit comprising:
a processor;
a set of peripherals;
a permanent key;
transform logic arranged to receive at least one access address from the processor and to transform said at least one access address in dependence on the value of the permanent key to produce a transformed access address; and
a peripheral address decoder arranged to receive access addresses including said at least one transformed access address from the processor and to map a respective access address onto each of said peripherals so as to allow the processor to access a corresponding one of said peripherals.
